# EUROPÄISCHE PATENTSCHRIFT

(11) **EP 4 147 104 B1**
(45) Veröffentlichungstag und Bekanntmachung des Hinweises auf die Patenterteilung: **29.05.2024**
(21) Anmeldenummer: 21761996.4
(22) Anmeldetag: 05.08.2021
(51) Int. Cl.: G05B 19/418

(54) **VERFAHREN UND STEUEREINHEIT ZUM BEREITSTELLEN VON TRANSPORTDATEN ZUM STEUERN EINES WARENTRANSPORTS IN EINER PRODUKTIONSUMGEBUNG SOWIE PRODUKTIONSUMGEBUNG**
METHOD AND CONTROL UNIT FOR PROVIDING TRANSPORT DATA FOR CONTROLLING A TRANSPORT OF GOODS IN A PRODUCTION ENVIRONMENT AND PRODUCTION ENVIRONMENT
PROCÉDÉ ET DE UNITÉ DE COMMANDE PERMETTANT DE FOURNIR DES DONNÉES DE TRANSPORT POUR COMMANDER UN TRANSPORT DE MARCHANDISES DANS UN ENVIRONNEMENT DE FABRICATION AINSI QU'ENVIRONNEMENT DE FABRICATION

(30) Priorität: 19.08.2020 EP 20191720
(43) Veröffentlichungstag der Anmeldung: 15.03.2023
(73) Patentinhaber: Siemens Aktiengesellschaft, 80333 München (DE)
(72) Erfinder: SEEBERGER, Sebastian, 96172 Mühlhausen (DE); HACK, Verena, 91315 Höchstadt (DE); STEIMANN, Ulrich, 90429 Nürnberg (DE)
(74) Vertreter: Siemens Patent Attorneys
(86) Internationale Anmeldenummer: PCT/EP2021/071916
(87) Internationale Veröffentlichungsnummer: WO 2022/037962

(56) Entgegenhaltungen:
- WO-A1-99/67729
- WO-A1-2016/082883
- DE-A1-102010 032 876
- DE-A1-102018 007 943
- DE-U1-202017 106 761

## Beschreibung

Die Erfindung betrifft ein Verfahren zum Bereitstellen von Transportdaten zum Steuern eines Warentransports in einer Produktionsumgebung. Ein zweiter Aspekt der Erfindung betrifft eine Steuereinheit zum Bereitstellen solcher Transportdaten. Weitere Aspekte der vorliegenden Anmeldung betreffen eine Produktionsumgebung mit einer solchen Steuereinheit sowie ein Computerprogramm und ein Speichermedium zur Durchführung eines Verfahrens.

Durch die heutige Bestandsführung in Lagerverwaltungssystemen im Rahmen von Produktionsumgebungen, welche Produktionseinheiten beziehungsweise Produktionsinseln und/oder Lagerplätze für die Lagerung von Bauteilen für eine spätere Weiterverarbeitung in den Produktionseinheiten beziehungsweise den Produktionsinseln aufweisen kann, kann es zu gravierenden Abweichungen zwischen realen und angenommenen Beständen an Bauteilen kommen. Solche Abweichungen können insbesondere vor Ort an der Produktionseinheit beziehungsweise Produktionsinsel auftreten. Dadurch kann einerseits ein Bestandsüberhang an Bauteilen und andererseits ein Leerlauf an der jeweiligen Produktionsinsel durch das Fehlen von Bauteilen resultieren. Außerdem ist der genaue Standort von Roh- oder Halbfertigerzeugnissen nicht bekannt. Heutige Versorgungsalgorithmen in einem solchen Verwaltungssystem sind starr und nicht selbstregulierend. Dies führt zu einem hohen Pflegeaufwand und einer hohen Komplexität in einem Betrieb. Außerdem ist keine flexible Automatisierung der Logistik im Sinne von Industrie 4.0 möglich. WO 2016/082883 A1 beschreibt ein Materiallogistiksystem mit mehreren Sensoren zur Erfassung eines Produktionsmaterialvorrates an Produktionsstationen. Eine Zentraleinheit steht in signalübertragender Verbindung mit den Sensoren und ermittelt Logistikdaten über das Produktionsmaterial für die jeweilige Produktionsstation.DE 10 2010 032876 A1 offenbart ein Produktionssystem einer Produktionsanlage mit einem Logistiksteuergerät, einem Stationssteuergerät mit Datenträger und einer Transporteinheit mit beweglichen Transporteinrichtungen, die mit einem Transportsteuergerät ausgestattet sind.

DE 20 2017 106761 U1 beschreibt ein Verfahren zum Betreiben einer Produktionsanlage mit einer Mehrzahl von Arbeitsstationen sowie einer Transporteinrichtung zum Transportieren von Gütern zwischen den Arbeitsstationen, welche eine Mehrzahl fahrerloser Flurförderzeuge umfasst, die sich auf jeweils vorgegebenen Pfaden zwischen zugeordneten Arbeitsstationen bewegen.

Es ist Aufgabe der vorliegenden Erfindung, eine flexiblere und/oder zuverlässigere Logistik in einer Produktionsumgebung zu ermöglichen.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche.

Ein erster Aspekt der vorliegenden Erfindung betrifft ein Verfahren zum Bereitstellen von Transportdaten zum Steuern eines Warentransports in einer Produktionsumgebung mit den folgenden Schritten:
- Bestimmen von Belegungsdaten anhand von Sensordaten einer Sensoreinheit an einer Produktionseinheit, wobei die Belegungsdaten einen Belegungszustand zumindest eines Wareneingangs der Produktionseinheit in der Produktionsumgebung mit jeweiligen lagernden Bauteilen betreffen, - Bestimmen von Bauteildaten,

wobei die Bauteildaten angeben, welche Bauteile für einen der Produktionseinheit zugeordneten Produktionsauftrag an der Produktionseinheit benötigt werden, - Bestimmen von Beschaffungsdaten für die zu verbauenden Bauteile, wobei
die Beschaffungsdaten angeben, wie lange ein Transport eines jeweiligen der zu verbauenden, entsprechend der Bauteildaten an der Produktionseinheit benötigten Bauteile von einem jeweiligen Lagerplatz zu der Produktionseinheit voraussichtlich benötigt, wobei das Bestimmen der Beschaffungsdaten zumindest in Abhängigkeit von einer Position des jeweiligen Lagerplatzes sowie einer Position der Produktionseinheit erfolgt, - Bestimmen von Transportdaten abhängig von den Belegungsdaten, den Bauteildaten und den Beschaffungsdaten, wobei die Transportdaten mittels eines Optimierungsalgorithmus bestimmt werden, wobei der Optimierungsalgorithmus die Belegungsdaten, die Bauteildaten und die Beschaffungsdaten als Input-Daten erhält und die Transportdaten ausgibt, wobei die Transportdaten einen durchzuführenden Transport beschreiben, und - Übermitteln der Transportdaten an ein Transportsystem zum Steuern eines Transports an Bauteilen mittels der Transportdaten.

Durch die genannten Daten (die Belegungsdaten, die Bauteildaten und die Beschaffungsdaten) ist insgesamt bekannt, wie der Belegungszustand der jeweiligen Produktionseinheit ist, welche Bauteile zu welchen Zeiten an dieser Produktionseinheit benötigt werden und wie lange deren Transport dauert. Anhand dieser (Eingangs) Daten werden die Transportdaten bspw. mittels eines herkömmlichen Optimierungsalgorithmus (bzw. einer auf einem solchen Optimierungsalgorithmus basierenden, insbesondere maschinell ausführbaren Funktion) bestimmt werden, welcher (welche) die Belegungsdaten, die Bauteildaten und die Beschaffungsdaten als Input-Daten erhält und die Transportdaten ausgibt.

Bei der Produktionsumgebung kann es sich um einen Bereich, etwa einer Fabrik, handeln, in welchem zumindest eine Produktionseinheit, vorzugsweise jedoch mehrere Produktionseinheiten, angeordnet sind. Die Produktionseinheit beziehungsweise Produktionseinheiten können auch als Produktionsinsel bezeichnet werden. Insbesondere ist vorgesehen, dass die Produktionseinheiten beziehungsweise die Produktionseinheit einen oder mehrere Produktionsschritte bei der Fertigung des Produkts ermöglicht beziehungsweise zur Durchführung des einen oder der mehreren Produktionsschritte eingerichtet ist. Beispielsweise kann vorgesehen sein, dass das Produkt nacheinander unterschiedliche Produktionseinheiten durchläuft, wobei an den unterschiedlichen Produktionseinheiten sequenziell unterschiedliche Produktionsschritte zur Fertigung des Produkts durchgeführt werden. Mit anderen Worten können in diesem Beispiel die Produktionseinheiten dazu ausgebildet sein, das Produkt über mehrere Zwischenschritte beziehungsweise Zwischenprodukte beziehungsweise Roh- oder Halbfertigerzeugnisse zu fertigen beziehungsweise zu veredeln. Alternativ oder zusätzlich kann vorgesehen sein, dass mehrere Produktionseinheiten dazu eingerichtet sind, denselben oder dieselben Produktionsschritte durchzuführen. Dies kann beispielsweise sinnvoll sein, wenn einzelne Produktionsschritte besonders zeitaufwändig sind im Vergleich zu anderen Produktionsschritten. Auf diese Weise kann eine Verzögerung der Produktion insgesamt vermieden werden, indem diese besonders zeitaufwändigen Produktionsschritte parallel durch mehrere Produktionseinheiten durchgeführt werden. Insbesondere weist jede Produktionseinheit eine Maschine oder Einrichtung auf, welche zur Durchführung eines der Produktionseinheit zugeordneten Produktionsschritts ausgebildet ist.

Die Belegungsdaten können beispielsweise aus den Sensordaten abgeleitet werden, wobei die Sensordaten den Belegungszustand des zumindest einen Wareneingangs der Produktionseinheit betreffen können. Beispielsweise können in einem zusätzlichen Verfahrensschritt, welcher insbesondere vor dem Bestimmen der Belegungsdaten durchgeführt wird, die Sensordaten von der Sensoreinheit empfangen werden. In einem anderen, ebenfalls optionalen Verfahrensschritt können die Sensordaten mittels der Sensoreinheit erfasst werden. Insbesondere ist die Sensoreinheit an der Produktionseinheit angeordnet. Die Sensoreinheit kann insbesondere eine Vielzahl an Sensoren aufweisen.

Der Wareneingang kann als sogenannter Warenkanal ausgeführt sein. Insbesondere ist vorgesehen, dass der Wareneingang eine Vielzahl an Wareneingangsplätzen aufweist. Jeder der Wareneingangsplätze kann dazu ausgebildet sein, jeweils eine vorbestimmte Anzahl an lagernden Bauteilen aufzunehmen. Bevorzugt ist vorgesehen, dass jeder der Wareneingangsplätze dazu ausgebildet ist, genau ein Transportbehältnis für Bauteile aufzunehmen beziehungsweise zu lagern. Jeder der Wareneingangsplätze kann einen jeweiligen Sensor der Sensoreinheit aufweisen. Auf diese Weise können die Sensordaten angeben, welche der Wareneingangsplätze mit lagernden Bauteilen beziehungsweise einem jeweiligen Transportbehältnis versehen sind. Mit anderen Worten können die Sensordaten den Belegungszustand jedes der Wareneingangsplätze angeben beziehungsweise charakterisieren. Vorzugsweise weist die Produktionseinheit mehrere Wareneingänge beziehungsweise Warenkanäle auf. Dabei ist insbesondere vorgesehen, dass jeder der Wareneingänge in einem Betrieb mit unterschiedlichen Bauteilen bestückt wird. Insbesondere kann vorgesehen sein, dass an einem jeweiligen Wareneingang ausschließlich gleiche Bauteile gelagert beziehungsweise aufgenommen werden. Auf diese Weise können die an der Produktionseinheit benötigten Bauteile so auf mehrere Wareneingänge verteilt werden, dass jeder Wareneingang nur gleiche Bauteile beinhaltet. Dies ist insbesondere dann sinnvoll, wenn an der Produktionseinheit mehrmals hintereinander dasselbe Produkt oder Zwischenprodukt beziehungsweise Roh- oder Halbfertigerzeugnis aus den Bauteilen gefertigt wird. Alternativ kann vorgesehen sein, das in einem sequenziellen Betrieb der Produktionseinheit, also wenn nacheinander unterschiedliche Produkte oder Zwischenprodukte beziehungsweise Roh- oder Halbfertigerzeugnisse gefertigt werden, nacheinander unterschiedliche Bauteile in einem jeweiligen Wareneingang zwischengelagert werden.

Die Bauteildaten können angeben, welche Bauteile an der Produktionseinheit benötigt werden, um den der Produktionseinheit zugeordneten Produktionsauftrag auszuführen. Der Produktionsauftrag kann dabei einen oder mehrere Produktionsschritte, zu deren Durchführung die Produktionseinheit ausgebildet beziehungsweise eingerichtet ist, beinhalten. In dem einen beziehungsweise den mehreren durch den Produktionsauftrag vorgegebenen Produktionsschritten kann unter Zuhilfenahme der Bauteile ein Produkt oder Zwischenprodukt gefertigt beziehungsweise veredelt werden. Dabei kann es sich bei einem oder den mehreren der zugrunde liegenden Bauteile bereits ebenfalls um ein Zwischenprodukt beziehungsweise ein Roh- oder Halbfertigerzeugnis handeln. Andere Beispiel für Bauteile können beispielsweise Schrauben, Klebstoff oder beliebige andere derartige Hilfsmittel sein. Die Bauteildaten können beispielsweise aus einer Produktdatenbank abgerufen werden, wobei in diesem Fall in der Produktdatenbank die jeweiligen Produktionsschritte und hierfür benötigten Bauteile für das zu fertigende Produkt gespeichert sein können. Beispielsweise können die benötigten Bauteile als Teil des Produktionsauftrags in einem Auftragsspeicher der Produktionseinheit gespeichert sein. Dieser Auftragsspeicher kann insbesondere dazu ausgebildet sein, den Produktionsauftrag zu speichern.

Die Beschaffungsdaten geben an, wie lange ein Transport eines jeweiligen der zu verbauenden Bauteile von einem jeweiligen Lagerplatz zu der Produktionseinheit voraussichtlich benötigt. Mit anderen Worten kann als Teil der Beschaffungsdaten bestimmt werden, wie lange es voraussichtlich dauert, ein jeweiliges Bauteil, welche entsprechend der Bauteildaten an der Produktionseinheit benötigt werden, von dem jeweiligen Lagerplatz des jeweiligen Bauteils zu der Produktionseinheit zu transportieren. Das Bestimmen der Beschaffungsdaten beziehungsweise der Dauer des Transports kann beispielsweise abhängig von einer Nutzereingabe, welche beispielsweise einen Wert für die Dauer des Transports enthält, anhand einer Entfernung zwischen Produktionseinheit und Lagerplatz und/oder anhand einer Historie vergangener Transporte zwischen dem jeweiligen Lagerplatz und der Produktionseinheit erfolgen.

Das Bestimmen der Transportdaten erfolgt nun abhängig von den Belegungsdaten, den Bauteildaten und den Beschaffungsdaten. Mit anderen Worten können die Transportdaten den durchzuführenden Transport in Abhängigkeit von den Belegungsdaten, den Bauteildaten und/oder den Beschaffungsdaten beschreiben beziehungsweise festlegen. Mit anderen Worten kann ein durchzuführender Transport eines oder mehrere Bauteile in Abhängigkeit von dem Belegungszustand des zumindest einen Wareneingangs der Produktionseinheit, den für einen jeweiligen Produktionsauftrag benötigten Bauteilen und der voraussichtlichen Dauer des Transports bestimmt werden. Auf diese Weise ist eine hochflexible Planung des durchzuführenden Transports basierend auf den Transportdaten ermöglicht. Zudem ist anhand der Belegungsdaten vorzugsweise stets der Belegungszustand des zumindest einen Wareneingangs beziehungsweise der am Wareneingang lagernden Bauteile bekannt. Auf diese Weise können Abweichungen zwischen realen und fiktiven Beständen an Bauteilen vermieden werden.

Gemäß einer Weiterbildung ist vorgesehen, dass die Transportdaten in einem zusätzlichen Verfahrensschritt an ein Transportsystem, insbesondere an eine Vielzahl fahrerloser Transportfahrzeuge, übermittelt werden. Beispielsweise erfolgt das Übermitteln der Transportdaten an das Transportsystem, insbesondere an die Vielzahl fahrerloser Transportfahrzeuge, über eine drahtgebundene oder drahtlose Verbindung. Eine solche drahtlose Verbindung kann insbesondere über das Mobilfunknetz, über Bluetooth, über WLAN beziehungsweise WiFi oder eine beliebige andere Funkverbindung realisiert werden. Durch das Übermitteln der Transportdaten wird das Transportsystem, insbesondere die Vielzahl fahrerloser Transportfahrzeuge, gesteuert werden. Insbesondere wird ein Transport an Bauteilen, welcher durch das Transportsystem, insbesondere die Vielzahl an fahrerlosen Transportfahrzeugen, erfolgt, mittels der Transportdaten gesteuert. Mit anderen Worten kann entsprechend der Transportdaten ein Transport der zu verbauenden Bauteile von dem jeweiligen Lagerplatz zu der Produktionseinheit beziehungsweise dem zumindest einen Wareneingang durch das Transportsystem, insbesondere die Vielzahl fahrerloser Transportfahrzeuge, vorgegeben beziehungsweise kommandiert werden. Der Transport der zu verbauenden Bauteile durch das Transportsystem, insbesondere die Vielzahl fahrerloser Transportfahrzeuge, kann gemäß der Transportdaten als Teil des beanspruchten Verfahrens aufgefasst werden. In diesem Fall wird das Verfahren alternativ als Verfahren zum Steuern eines Warentransports in einer Produktionsumgebung bezeichnet werden. Mit anderen Worten betrifft die vorliegende Erfindung auch ein solches Verfahren zum Steuern eines Warentransports beziehungsweise zum Transportieren von Bauteilen in einer Produktionsumgebung.

Gemäß einer Weiterbildung ist vorgesehen, dass abhängig von dem der Produktionseinheit zugeordneten Produktionsauftrag ein Produktionstakt bestimmt wird und das Bestimmen der Transportdaten zusätzlich abhängig von diesem Produktionstakt erfolgt. Der Produktionstakt kann angeben, wie lange die Produktionseinheit für die Abarbeitung des zugeordneten Produktionsauftrages voraussichtlich oder im Schnitt benötigt. Insbesondere kann der Produktionstakt eine Periodizität angeben, mit welcher durch den Produktionsauftrag vorgegebene Produktionsschritte an einem Zwischenprodukt beziehungsweise Roh- oder Halbfertigerzeugnis durchgeführt werden. Beispielsweise gibt der Produktionstakt an, wie lange es dauert, ein Zwischenprodukt beziehungsweise Halbfertigerzeugnis gemäß dem Produktionsauftrag an der Produktionseinheit zu fertigen. Somit kann der Produktionstakt eine Periodendauer angeben, mit der eine Fertigung von Zwischenprodukten beziehungsweise Halbfertigerzeugnissen gemäß dem Produktionsauftrag an der Produktionseinheit erfolgt. Auf diese Weise kann das Bestimmen der Transportdaten zusätzlich abhängig von der Dauer der jeweiligen Ausführung des Produktionsauftrages erfolgen. Dadurch kann in Abhängigkeit von dem Produktionstakt gewährleistet werden, dass stets genug Bauteile an der Produktionseinheit vorhanden sind, ohne dass die Produktion durch die Produktionseinheit aufgrund von Bauteilmangel pausiert werden muss.

Gemäß einer Weiterbildung ist vorgesehen, dass in Abhängigkeit von dem Produktionstakt, den Bauteildaten und den Belegungsdaten eine Restlaufzeit der an der Produktionseinheit lagernden Bauteile bestimmt wird, wobei der durchzuführende Transport entsprechend den Transportdaten zu einem Zeitpunkt, zu welchem die Restlaufzeit größer ist als eine durch den Produktionstakt bestimmte Zeitspanne, kommandiert wird. Mit anderen Worten kann die Restlaufzeit angeben, wie lange die an der Produktionseinheit beziehungsweise in dem zumindest einen Wareneingang der Produktionseinheit lagernden Bauteile unter Berücksichtigung des Produktionstakts und der Bauteildaten noch für die Durchführung des Produktionsauftrags reichen werden. Dies kann für alle Arten an Bauteilen unabhängig voneinander durchgeführt werden. Beispielsweise wird für alle verschiedenartigen Bauteile bestimmt, wie viele Produktionstakte entsprechend einem durch die Bauteildaten vorgegebenen Verbrauch pro Produktionstakt mit den lagernden Bauteilen noch möglich sind. Dies multipliziert mit der durch den Produktionstakt bestimmten Zeitspanne kann die Restlaufzeit ergeben. Die durch den Produktionstakt bestimmte Zeitspanne ist insbesondere die Periodendauer beziehungsweise Dauer pro gefertigtem Zwischenprodukt beziehungsweise Halbfertigprodukt, welche dem Produktionstakt zugrunde liegt. Dadurch, dass durch die Transportdaten der Transport zu einem Zeitpunkt kommandiert beziehungsweise festgelegt wird, zu welchem die Restlaufzeit größer als die durch den Produktionstakt bestimmte Zeitspanne ist, ist gewährleistet, dass stets ausreichend Bauteile zur Aufrechterhaltung der Produktion beziehungsweise zur Durchführung des Produktionsauftrags an der Produktionseinheit vorhanden sind beziehungsweise lagern.

Gemäß einer Weiterbildung ist vorgesehen, dass den jeweiligen Lagerplätzen und/oder der Produktionseinheit jeweils eindeutige Koordinaten bezogen auf ein Koordinatensystem der Produktionsumgebung zugeordnet werden. In weiterer Ausgestaltung kann vorgesehen sein, dass jedem Wareneingang beziehungsweise jedem Warenkanal der Produktionseinheit eine jeweilige eindeutige Koordinate zugeordnet wird. Die genannten Koordinaten können jeweils entsprechend einer Nutzereingabe zugeordnet werden. Auf diese Weise hat jeder der Lagerplätze und/oder jede Produktionseinheit und/oder jeder Wareneingang eine jeweils eindeutige Koordinate, welche die Produktionsumgebung als Ganzes charakterisieren kann. Insbesondere im Falle eines Umbaus der Produktionsumgebung ist eine erneute Anpassung an die umgebaute Produktionsumgebung dadurch erleichtert, dass jeweils nur die Koordinaten aktualisiert werden müssen. Durch die eindeutige Koordinate eines jeweiligen Wareneingangs beziehungsweise Warenkanals kann jeder der Wareneingänge beziehungsweise Warenkanäle einzeln adressiert werden. Dies verbessert einerseits die Flexibilität und andererseits die Genauigkeit, mit welcher Transporte ermöglicht werden.

Gemäß einer Weiterbildung ist vorgesehen, dass das Bestimmen der Belegungsdaten beinhaltet, anhand der Sensordaten eine Anzahl an in dem zumindest einen Wareneingang befindlichen Transportbehältnissen zu bestimmen und diese Anzahl an Transportbehältnissen mit einem vorbestimmten Wert zu multiplizieren. Der vorbestimmte Wert kann dabei für unterschiedliche Arten beziehungsweise Kategorien an Bauteilen unterschiedlich sein. Insbesondere ist vorgesehen, dass ein zu der Produktionseinheit transportiertes Transportbehältnis immer eine Anzahl an Bauteilen enthält, die dem vorbestimmten Wert entspricht. Ist der vorbestimmte Wert für unterschiedliche Arten von Bauteilen unterschiedlich, so enthält das jeweilige Transportbehältnis so viele Bauteile, wie der für die entsprechende Art an Bauteil spezifische vorbestimmte Wert vorgibt. Auf diese Weise kann auf einfache Weise die Anzahl an Bauteilen aus der Anzahl an Transportbehältnissen bestimmt werden. Die Anzahl an in einem Wareneingang befindlichen Bauteilen entspricht dementsprechend der Anzahl an in dem jeweiligen Wareneingang befindlichen Transportbehältnissen multipliziert mit dem jeweils vorbestimmten Wert. Auf diese Weise entfällt jegliches Zählen von Bauteilen, da aus den Sensordaten beziehungsweise Belegungsdaten stets die Anzahl an Bauteilen berechnet werden kann. Hierdurch wird eine deutliche Vereinfachung der Lagerhaltung ermöglicht.

Gemäß einer Weiterbildung ist vorgesehen, dass ein jeweiliger Inhalt eines in dem zumindest einen Wareneingang oder auf dem Warenkanal befindlichen Transportbehältnisses anhand der Koordinate des jeweiligen Wareneingangs bestimmt wird. Mit anderen Worten ist jedem Wareneingang der Produktionseinheit ein jeweiliger Typ an Bauteil beziehungsweise ein bestimmtes Bauteil zugeordnet. Das zugeordnete Bauteil beziehungsweise der zugeordnete Typ an Bauteil kann dann anhand der Koordinate des jeweiligen Wareneingangs abgerufen werden. Beispielsweise sind die den jeweiligen Wareneingängen zugeordneten Bauteile beziehungsweise Typen an Bauteilen in einer entsprechenden Bauteildatenbank hinterlegt. Auf diese Weise ist eine Typisierung der Transportbehältnisse nicht nötig. Vielmehr kann allein anhand der Koordinate des jeweiligen Wareneingangs, in dem sich ein Transportbehältnis befindet oder zu welchem ein Transportbehältnis auf dem Transportweg unterwegs ist, auf den Inhalt des entsprechenden Transportbehältnisses geschlossen werden. Darin liegt eine deutliche Vereinfachung des Lagerhaltungssystems.

Gemäß einer Weiterbildung ist vorgesehen, dass die Belegungsdaten und/oder die Sensordaten zusätzlich einen Belegungszustand zumindest eines Warenausgangs der Produktionseinheit betreffen. Mit anderen Worten kann als Teil der Sensordaten und/oder Belegungsdaten ein Belegungszustand des Warenausgangs bestimmt werden. Dabei kann insbesondere anhand der Sensordaten als Teil der Belegungsdaten bestimmt werden, ob und/oder wie viele Warenausgangsplätze des Warenausgangs belegt beziehungsweise frei sind. Auf diese Weise ist stets der Belegungszustand des Warenausgangs bekannt. Basiert auf dem Belegungszustand des Warenausgangs kann ein rechtzeitiger Abtransport vor leeren Transportbehältnissen gewährleistet werden. Auf diese Weise kann eine Überfüllung des Warenausgangs vermieden werden.

Gemäß einer Weiterbildung ist vorgesehen, dass das Bestimmen der Beschaffungsdaten zumindest in Abhängigkeit von einer Position des jeweiligen Lagerplatzes sowie einer Position der Produktionseinheit erfolgt. Insbesondere kann die voraussichtliche Dauer, wie lange ein Transport eines jeweiligen der zu verbauenden Bauteile von dem jeweiligen Lagerplatz zu der Produktionseinheit benötigt, basierend aus der jeweiligen Position des Lagerplatzes und der Produktionseinheit abgeleitet werden. Insbesondere kann eine Relativposition zwischen dem jeweiligen Lagerplatz und der Produktionseinheit bestimmt werden. Alternativ oder zusätzlich kann ein Pfad innerhalb der Produktionsumgebung bestimmt werden, entlang welchem der genannte Transport erfolgen kann. Mithilfe einer durchschnittlichen Geschwindigkeit, beispielsweise einem gemittelten Wert aus der Vergangenheit oder einem vorbestimmten Wert für die durchschnittliche Geschwindigkeit, kann dann die Transportdauer bestimmt werden.

Alternative oder zusätzliche Möglichkeiten, die Beschaffungsdaten beziehungsweise die Dauer des Transports zu bestimmen, sind beispielsweise: Ableiten der Dauer aus einer Benutzereingabe oder eine Mittelung von Messungen, wie lange vorangegangene Transporte, insbesondere desselben Bauteils, benötigt haben.

Ein zweiter Aspekt der vorliegenden Erfindung betrifft eine Steuereinheit zum Bereitstellen von Transportdaten zum Steuern eines Warentransports in einer Produktionsumgebung. Die Steuereinheit weist auf:
- eine Belegungsbestimmungsdateneinheit ausgebildet zum Bestimmen von Belegungsdaten, welche einen Belegungszustand zumindest eines Wareneingangs einer Produktionseinheit in der Produktionsumgebung mit jeweiligen lagernden Bauteilen betreffen, anhand von Sensordaten einer Sensoreinheit der Produktionseinheit,
- eine Bauteildatenbestimmungseinheit ausgebildet zum Bestimmen von Bauteildaten, wobei die Bauteildaten angeben, welche Bauteile für einen der Produktionseinheit zugeordneten Produktionsauftrag an der der Produktionseinheit benötigt werden,
- eine Beschaffungsdatenbestimmungseinheit ausgebildet zum Bestimmen von Beschaffungsdaten für die zu verbauenden Bauteile, wobei die Beschaffungsdaten angeben, wie lange ein Transport eines jeweiligen der zu verbauenden, entsprechend der Bauteildaten an der Produktionseinheit benötigten Bauteile von einem jeweiligen Lagerplatz zu der Produktionseinheit voraussichtlich benötigt, wobei das Bestimmen der Beschaffungsdaten zumindest in Abhängigkeit von einer Position des jeweiligen Lagerplatzes sowie einer Position der Produktionseinheit erfolgt,
- eine Transportdatenbestimmungseinheit ausgebildet zum Bestimmen der Transportdaten abhängig von den Belegungsdaten, den Bauteildaten und den Beschaffungsdaten, wobei die Transportdaten mittels eines Optimierungsalgorithmus bestimmt werden, wobei der Optimierungsalgorithmus die Belegungsdaten, die Bauteildaten und die Beschaffungsdaten als Input-Daten erhält und die Transportdaten ausgibt, wobei die Transportdaten einen durchzuführenden Transport beschreiben, und
- eine Ausgabeschnittstelle zum Ausgeben der Transportdaten,
die dazu ausgebildet ist, die Transportdaten an ein Transportsystem zum Steuern eines Transports an Bauteilen mittels der Transportdaten zu übermitteln.

Insbesondere ist die Steuereinheit dazu eingerichtet, ein erfindungsgemäßes Verfahren zum Bereitstellen von Transportdaten gemäß einer oder mehrerer der in der vorliegenden Anmeldung beschriebenen Ausführungsformen durchzuführen. Aus diesem Grund gelten sämtliche Weiterbildungen und deren Vorteile, welche in Bezug auf das erfindungsgemäße Verfahren offenbart sind, auch für die erfindungsgemäße Steuereinheit, auch wenn diese aus Gründen der Knappheit hier nicht wiederholt sind.

Optional kann die Steuereinheit zusätzlich eine Ausgabeschnittstelle zum Ausgeben der Transportdaten aufweisen. Insbesondere ist die Ausgabeschnittstelle dazu ausgebildet, die Transportdaten an das Transportsystem zu übermitteln. Beispielsweise kann die Ausgabeschnittstelle ein Funkmodul aufweisen, mittels welchem die Ausgabeschnittstelle dazu ausgebildet ist, die Transportdaten an eine Vielzahl fahrerloser Transportfahrzeuge zu übermitteln.

Die Steuereinheit kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann beispielsweise zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcodemittel aufweisen, welche dazu eingerichtet ist, bei Ausführen durch die Prozessoreinrichtung die Ausführungsform des erfindungsgemäßen Verfahrens durchzuführen. Die Programmcodemittel können in einem Datenspeicher der Prozessoreinrichtung gespeichert sein.

Ein dritter Aspekt der vorliegenden Erfindung betrifft eine Produktionsumgebung mit der erfindungsgemäßen Steuereinheit und der Produktionseinheit, an welcher die Sensoreinheit angeordnet ist, wobei die Sensoreinheit dazu ausgebildet ist, die Sensordaten bezüglich des Belegungszustands des zumindest einen Wareneingangs zu erfassen. Mit anderen Worten ist die Sensoreinheit Teil der erfindungsgemäßen Produktionsumgebung. Insbesondere weist die erfindungsgemäße Produktionsumgebung eine Vielzahl an Produktionseinheiten auf. Dabei kann jede der Produktionseinheiten eine jeweilige Sendeeinheit aufweisen.

Insbesondere ist die Produktionsumgebung dazu eingerichtet, ein erfindungsgemäßes Verfahren zum Bereitstellen von Transportdaten gemäß einer oder mehrerer der in der vorliegenden Anmeldung beschriebenen Ausführungsformen durchzuführen. Aus diesem Grund gelten sämtliche Weiterbildungen und deren Vorteile, welche in Bezug auf das erfindungsgemäße Verfahren offenbart sind, auch für die erfindungsgemäße Produktionsumgebung, auch wenn diese aus Gründen der Knappheit hier nicht wiederholt sind.

Zur Erfindung gehört außerdem ein Computerprogramm, welches direkt in einen Speicher einer erfindungsgemäßen Steuereinheit ladbar ist, mit Programmcodemitteln, um die Schritte des erfindungsgemäßen Verfahrens auszuführen, wenn das Programm in der Steuereinheit ausgeführt wird. Das erfindungsgemäße Computerprogramm implementiert das erfindungsgemäße Verfahren auf der erfindungsgemäßen Steuereinheit, wenn es in der Steuereinheit ausgeführt wird. Dementsprechend gehört zur Erfindung außerdem ein Speichermedium mit darauf gespeicherten elektronisch lesbaren Steuerinformationen, welche zumindest das genannte Computerprogramm umfassen und derart ausgestaltet sind, dass sie bei Verwendung des Speichermediums in einer erfindungsgemäßen Steuereinheit das erfindungsgemäße Verfahren durchführen. Das Speichermedium kann beispielsweise zum digitalen oder analogen Speichern von Daten eingerichtet sein. Das Speichermedium kann, einfach oder mehrfach beschreibbar, flüchtig (volatil) oder nicht flüchtig sein.

Das erfindungsgemäße Verfahren und/oder das erfindungsgemäße Computerprogramm können jeweils durch die erfindungsgemäße Steuereinheit, einen einzelnen Computer, einen Verbund aus mehreren Computern und/oder durch eine Servereinrichtung beziehungsweise einen Sever bereitgestellt werden. Insbesondere ist eine Bereitstellung durch eine Cloud möglich.

Die Erfindung wird nun anhand der beigefügten Zeichnungen genauer erläutert. Dabei gelten auch Merkmale, welche in der nachfolgenden Figurenbeschreibung oder den Figuren alleine gezeigt sind, als Weiterbildungen des erfindungsgemäßen Verfahrens, der erfindungsgemäßen Steuereinheit oder der erfindungsgemäßen Produktionsumgebung. Es zeigen:
- FIG 1: in einer schematischen Draufsicht einen Überblick über eine Produktionsumgebung mit mehreren Produktionseinheiten;
- FIG 2: ein Ablaufdiagramm einer beispielhaften Ausführungsform eines Verfahrens zum Bereitstellen von Transportdaten zum Steuern eines Warentransports;
- FIG 3: ein schematisches Blockschaltbild einer Steuereinheit zur Durchführung des Verfahrens;
- FIG 4: ein Ablaufdiagramm einer zweiten beispielhaften Ausführungsform des Verfahrens; und
- FIG 5: ein Ablaufdiagramm einer dritten beispielhaften Ausführungsform des Verfahrens.

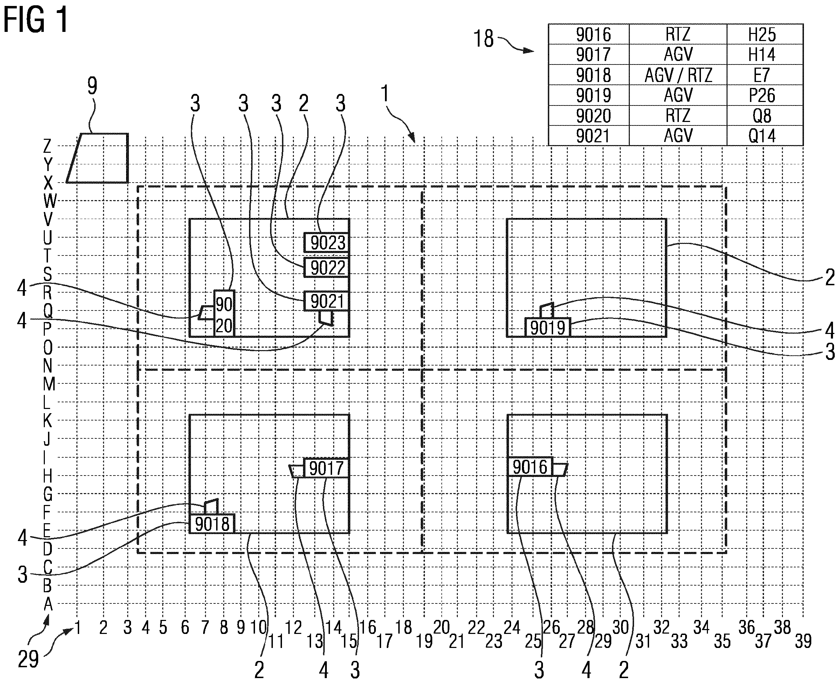

FIG 1 zeigt eine schematische Draufsicht auf eine Produktionsumgebung 1 mit einer Vielzahl an Produktionseinheiten 2. Die Produktionseinheiten 2 sind dazu eingerichtet, einen jeweiligen oder mehrere jeweilige Produktionsschritte bei der Fertigung eines Produkts durchzuführen. Beispielsweise kann vorgesehen sein, dass das Produkt während dessen Fertigung nacheinander unterschiedliche Produktionseinheiten 2 durchläuft, wobei an den unterschiedlichen Produktionseinheiten 2 sequenziell unterschiedliche Produktionsschritte zur Fertigung des Produkts durchgeführt werden. Mit anderen Worten können in diesem Beispiel die Produktionseinheiten 2 dazu ausgebildet sein, das Produkt über mehrere Zwischenschritte beziehungsweise Zwischenprodukte beziehungsweise Roh- oder Halbfertigerzeugnisse zu fertigen beziehungsweise zu veredeln. Alternativ oder zusätzlich kann vorgesehen sein, dass mehrere Produktionseinheiten 2 dazu eingerichtet sind, denselben oder dieselben Produktionsschritte durchzuführen. Dies kann beispielsweise sinnvoll sein, wenn einzelne Produktionsschritte besonders zeitaufwändig sind im Vergleich zu anderen Produktionsschritten. Die Produktionseinheiten 2 können jeweils als Produktionsinsel bezeichnet werden.

Um die Verarbeitung des Produkts zu gewährleisten, ist einerseits ein Transport von Rohbauteilen, etwa Schrauben oder Anbauteilen, sowie von Zwischenprodukten beziehungsweise Roh- oder Halbfertigerzeugnissen zwischen den Produktionseinheiten 2 untereinander sowie zwischen den Produktionseinheiten 2 und einem Lager mit einer Vielzahl an Lagerplätzen nötig. Zur Vereinfachung ist im Rahmen der vorliegenden Anmeldung stets von Bauteilen die Rede, was alle möglichen Arten an Bauteilen, also Rohbauteile sowie Zwischenprodukten beziehungsweise Roh- oder Halbfertigerzeugnisse, einschließen soll. Der Transport der Bauteile wird zentral durch eine Steuereinheit 9 gesteuert. Mit anderen Worten ist die Steuereinheit 9 dazu ausgebildet, den Warentransport in der Produktionsumgebung 1 zu steuern beziehungsweise entsprechende Transportdaten zum Steuern des Warentransports bereitzustellen.

Zur Aufnahme der Bauteile weisen die Produktionseinheiten 2 jeweils zumindest einen Wareneingang 3 beziehungsweise Warenkanal 3 auf. Jeder Wareneingang 3 beziehungsweise Warenkanal 3 weist dabei mehrere Wareneingangsplätze auf, wobei an jedem der Wareneingangsplätze genau ein Transportbehältnis für Bauteile gelagert werden kann. Zudem weist jede Produktionseinheit 2 beziehungsweise jeder Warenkanal 3 eine jeweilige Sensoreinheit 4 auf. Die Sensoreinheit 4 ist dazu ausgebildet, Sensordaten, welche den Lagerzustand der Warenkanäle 3 betreffen, bereitzustellen. Insbesondere können die Sensordaten angeben, welche Warenkanäle 3 beziehungsweise welche Wareneingangsplätze belegt sind. Beispielsweise kann die Sensoreinheit 4 eine Vielzahl an Sensoren aufweisen, wobei an jedem der Wareneingangsplätze ein jeweiliger Sensor angeordnet ist. Jeder der Sensoren kann zu den Sensordaten beitragen, ob der jeweilige Wareneingangsplatz mit einem Transportbehältnis belegt oder frei ist. Hierzu kann jeder der Sensoren beispielsweise als jeweiliger Drucksensor, als Lichtschranke, als durch die Transportbehältnisse auslösbarer Schalter oder als beliebiger anderer Sensor ausgeführt sein.

Insgesamt können die Sensordaten somit angeben, welche Warenkanäle 3 beziehungsweise welche der Wareneingangsplätze mit Transportbehältnissen belegt sind.

In FIG 1 ist weiterhin ersichtlich, dass der Produktionsumgebung 1 Koordinaten 29 zugeordnet sind. Ebenso sind den Warenkanälen 3 jeweilige Adressen zugeordnet. Auf diese Weise sind die Warenkanäle 3 hinsichtlich ihrer Platzierung innerhalb der Produktionsumgebung 1 durch die Koordinaten 29 und zusätzlich anhand ihrer jeweiligen Adresse eindeutig bestimmt. Beispielsweise befindet sich der Warenkanal 3 mit der Adresse 9020 an der Koordinate Q8 und der Warenkanal 3 mit der Adresse 9021 an der Koordinate Q14. Durch die jeweilige Zuordnung der Koordinaten 29 ist eine einfache Planung innerhalb der Produktionsumgebung 1 möglich. Auch bei einem Umstellen der Produktionsumgebung 1 beziehungsweise bei einer Anpassung der Produktionseinheiten 2 an einen veränderten Betrieb kann durch Anpassen der Koordinaten 29 die veränderte Produktionsumgebung auf einfache Weise abgebildet werden. Anhand einer Zuordnungstabelle 18 kann den einzelnen Warenkanälen 3 zusätzlich ein jeweiliger Typ an Transporteinheiten (RTZ oder AGV) eines Transportsystems sowie die jeweilige Koordinate zugeordnet werden.

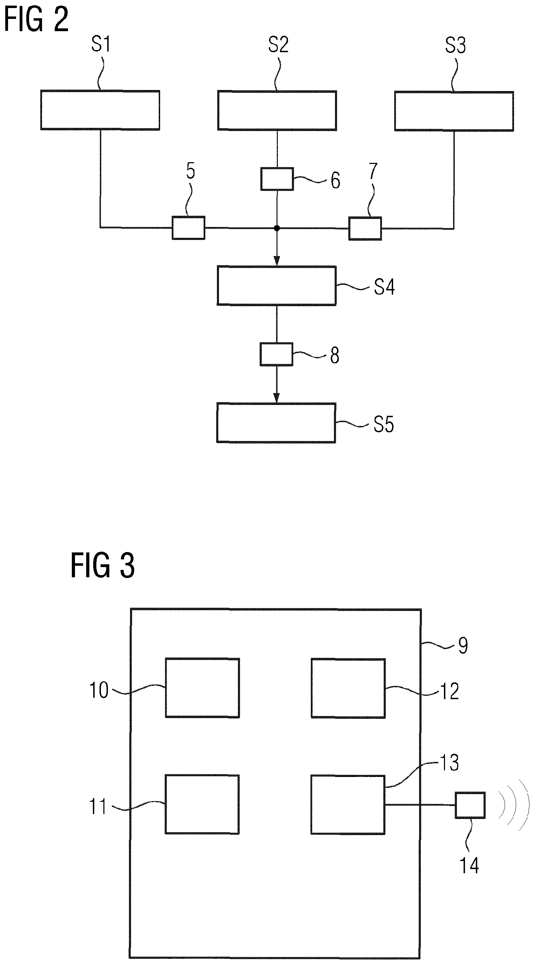

In FIG 2 ist ein Ablaufdiagramm einer beispielhaften Ausführungsform eines Verfahrens zum Bereitstellen von Transportdaten (Schritte S1 bis S4) beziehungsweise eines Verfahrens zum Steuern eines Warentransports (Schritte S1 bis S5). In einem Schritt S1 erfolgt ein Bestimmen von Belegungsdaten 5, welche den Belegungszustand der Warenkanäle 3 der Produktionseinheiten 2 in der Produktionsumgebung 1 mit jeweiligen lagernden Bauteilen betreffen. Mit anderen Worten geben die Belegungsdaten an, wie viele Bauteile in den Warenkanälen 3 der Produktionseinheiten 2 lagern.

Die Belegungsdaten werden vorliegend aus den Sensordaten abgeleitet. Konkret können die Belegungsdaten aus den Belegungszuständen der Wareneingangsplätze abgeleitet werden. Dabei ist jeder der Warenkanäle 3 spezifisch genau einem Bauteil beziehungsweise einer Art an Bauteil zugeordnet. Zusätzlich kann vorgesehen sein, dass standardmäßig stets dieselbe Anzahl an Bauteilen innerhalb eines Transportbehältnisses angeordnet wird beziehungsweise transportiert wird. Mit anderen Worten wird zum Transport in einem Transportbehältnis stets eine vorbestimmte Anzahl an Bauteilen in dem jeweiligen Transportbehältnis angeordnet. Die vorbestimmte Anzahl kann dabei spezifisch für ein bestimmtes Bauteil beziehungsweise eine Art an Bauteilen sein. Beispielsweise kann vorgesehen sein, dass stets zehn gleichartige Schrauben innerhalb eines Transportbehältnisses transportiert werden. Auf diese Weise kann die Anzahl an Bauteilen in einem Warenkanal 3 auf einfache Weise durch Multiplikation der Anzahl an Transportbehältnissen (anhand der Sensordaten ersichtlich) mit der vorbestimmten Anzahl für das jeweilige Bauteil berechnet werden.

In einem Schritt S2 werden Bauteildaten 6 bestimmt, wobei die Bauteildaten 6 angeben, welche Bauteile für einen der Produktionseinheit 2 zugeordneten Produktionsauftrag an der Produktionseinheit 2 benötigt werden. Mit anderen Worten wird in dem Schritt S2 bestimmt, welche Bauteile, also beispielsweise welche Rohbauteil und/oder Zwischenprodukte, für die weitere Verarbeitung im Rahmen des Produktionsauftrags an einer jeweiligen Produktionseinheit 2 benötigt werden. Dies kann beispielsweise aus einer entsprechenden Datenbank abgerufen werden. Beispielsweise können die benötigten Bauteile als Teil des Produktionsauftrags in einem Auftragsspeicher der jeweiligen Produktionseinheit 2 gespeichert sein. Dieser Auftragsspeicher kann insbesondere dazu ausgebildet sein, den Produktionsauftrag zu speichern. Alternativ oder zusätzlich kann es vorgesehen sein, dass die benötigten Bauteile aus einer Produktdatenbank abgerufen werden, wobei in der Produktdatenbank insbesondere eine Vielzahl an entsprechenden Datensätzen für unterschiedliche Produkte gespeichert sind. Alternativ oder zusätzlich ist es sehr verständlich möglich, dass die benötigten Bauteile aus einer Nutzereingabe abgeleitet werden. Für eine solche Nutzereingabe kann die jeweilige Produktionseinheit 2 eine entsprechende Benutzerschnittstelle, beispielsweise Maus, Tastatur und/oder Bildschirm, aufweisen.

Als Teil der Bauteildaten kann ein Produktionstakt bestimmt werden. Der Produktionstakt kann dabei eine Periodendauer oder eine Frequenz angeben, mit welcher der Produktionsauftrag an der jeweiligen Produktionseinheit 2 durchgeführt wird beziehungsweise durchzuführen ist. Die Bestimmung des Produktionstaktes kann beispielsweise anhand der Nutzereingabe und/oder anhand der Produktdatenbank erfolgen.

Den Warenkanälen 3 kann anhand ihrer eindeutigen Adresse, beispielsweise 9020 oder 9021, ein jeweiliges Bauteil beziehungsweise eine jeweilige Bauteilart zugeordnet sein. Mit anderen Worten können innerhalb eines Warenkanals 3 ausschließlich gleichartige Bauteile beziehungsweise Bauteile gleicher Art gelagert beziehungsweise geliefert werden. Die Zuordnung der Bauteile zu dem Warenkanal 3 erfolgt dabei über die eindeutige Adresse des jeweiligen Warenkanals 3. Die entsprechende Zuordnung kann in einer Datenbank der Steuereinheit 9 gespeichert sein.

In einem Schritt S3 erfolgt ein Bestimmen von Beschaffungsdaten 7 für die zu verbauenden Bauteile. Die Beschaffungsdaten 7 geben an, wie lange es benötigt, jeweilige Bauteile zu einer der Produktionseinheiten 2 zu liefern. Dabei können die Beschaffungsdaten 7 dies jeweils bezogen auf die eindeutige Adresse eines dem jeweiligen Bauteil zugeordneten Warenkanals 3 angeben. Mit anderen Worten können die Beschaffungsdaten 7 angeben, wie lange ein Transport der einem jeweiligen Wareneingang 3 zugeordneten Bauteile von einem jeweiligen Lagerplatz in einem externen Lager zu dem entsprechenden Warenkanal 3 beziehungsweise der Produktionseinheit 2 voraussichtlich dauern wird. Beispielsweise geben die Beschaffungsdaten 7 eine Dauer an, wie lange es dauert den Wareneingang mit der eindeutigen Adresse 9019 mit den zugeordneten Bauteilen von dem entsprechenden Lagerplatz, an dem die zugeordneten Bauteile im externen Lager lagern, zu beliefern.

In dem Schritt S4 erfolgt ein Bestimmen von Transportdaten 8. Die Transportdaten 8 dienen dazu, den Warentransport in der Produktionsumgebung 1 zu steuern. Beispielsweise beinhalten die Transportdaten 8 einen Fahrplan oder einen Ablaufplan für durchzuführende Transporte in der Produktionsumgebung 1. Insbesondere können die durchzuführenden Transporte durch die eindeutigen Adressen der Warenkanäle 3 und/oder deren Koordinaten sowie einen Zeitstempel charakterisiert sein. Mit anderen Worten können die Transportdaten angeben, zu welchen Zeiten ein Transportsystem in der Produktionsumgebung 1 welche Transporte von oder zu welchen Warenkanälen 3 durchführt. Dies erfolgt basierend auf den Belegungsdaten 5, den Bauteildaten 6 und den Beschaffungsdaten 7. Durch die genannten Daten ist insgesamt bekannt, welche Bauteile zu welchen Zeiten an der jeweiligen Produktionseinheit 2 benötigt werden wie lange deren Transport dauert. Auf diese Weise kann sichergestellt werden, dass der Transport jeweils rechtzeitig beginnt, sodass die entsprechenden Bauteile geliefert werden, bevor sie an der Produktionseinheit 2 aufgebraucht sind. Auf diese Weise können Produktionsausfälle beziehungsweise Produktionsstopps verringert werden.

In einem optionalen Schritt S5 wird das Transportsystem, welches insbesondere eine Vielzahl fahrerloser Transportfahrzeuge beinhaltet, entsprechend den Transportdaten 8 gesteuert. Mit anderen Worten wird in dem Schritt S5 der Transport der Bauteile entsprechend den Transportdaten 8 vorgegeben. Im Zuge des Schritts S5 können die Transportdaten 8 beispielsweise an das Transportsystem, insbesondere die Vielzahl fahrerloser Transportfahrzeuge, übermittelt werden. Beispielsweise werden die fahrerlosen Transportfahrzeuge entsprechend dem Ablaufplan beziehungsweise dem Fahrplan gesteuert. Alternativ kann vorgesehen sein, dass die fahrerlosen Transportfahrzeuge dazu ausgebildet sind, anhand der Transportdaten 8 autonom den Transport der Bauteile durchzuführen.

FIG 3 zeigt die Steuereinheit 9 in einem äußerst schematischen Blockschaltbild. Die Steuereinheit 9 weist vorliegend eine Belegungsbestimmungsdateneinheit 10 ausgebildet zum Bestimmen der Belegungsdaten 5 auf. Insbesondere ist die Belegungsbestimmungsdateneinheit 10 zur Durchführung des Verfahrensschritts S1 ausgebildet. Die Steuereinheit 9 weist vorliegend eine Bauteildatenbestimmungseinheit 11 ausgebildet zum Bestimmen der Bauteildaten 6 auf. Insbesondere ist die Bauteildatenbestimmungseinheit 11 dazu ausgebildet, den Verfahrensschritt S2 durchzuführen. Zusätzlich weist die Steuereinheit 9 vorliegend eine Beschaffungsdatenbestimmungseinheit 12 ausgebildet zum Bestimmen der Beschaffungsdaten 7. Insbesondere ist die Beschaffungsdatenbestimmungseinheit 12 dazu ausgebildet, den Verfahrensschritt S3 durchzuführen. Zusätzlich weist die Steuereinheit 9 vorliegend eine Transportdatenbestimmungseinheit 13 auf, welche ausgebildet ist, die Transportdaten 8 abhängig von den Belegungsdaten 5, den Bauteildaten 6 und den Beschaffungsdaten 7 bestimmen. Insbesondere ist die Transportdatenbestimmungseinheit 13 dazu ausgebildet, den Verfahrensschritt S4 durchzuführen. Außerdem weist die Steuereinheit 9 im vorliegenden Beispiel eine Ausgabeschnittstelle 14 auf, wobei die Ausgabeschnittstelle 14 vorliegend beispielhaft ein Funkmodul aufweist. Die Ausgabeschnittstelle 14 ist insbesondere dazu ausgebildet, die Transportdaten 8 an das Transportsystem, insbesondere die fahrerlosen Transportfahrzeuge, zu übermitteln und/oder das Transportsystem, insbesondere die fahrerlosen Transportfahrzeuge, anhand der Transportdaten 8 zu steuern.

Die Steuereinheit 9 kann eine Datenverarbeitungsvorrichtung oder eine Prozessoreinrichtung aufweisen. Beispielsweise implementiert die Datenverarbeitungsvorrichtung und/oder die Prozessoreinrichtung die Belegungsbestimmungsdateneinheit 10, die Bauteildatenbestimmungseinheit 11, die Beschaffungsdatenbestimmungseinheit 12 und/oder die Transportdatenbestimmungseinheit 13. Die Prozessoreinrichtung kann beispielsweise zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcodemittel aufweisen, welche dazu eingerichtet ist, bei Ausführen durch die Prozessoreinrichtung eine Ausführungsform des Verfahrens zum Bereitstellen von Transportdaten und/oder zum Steuern des Warentransports in der Produktionsumgebung 1 durchzuführen. Die Programmcodemittel können in einem Datenspeicher der Prozessoreinrichtung gespeichert sein.

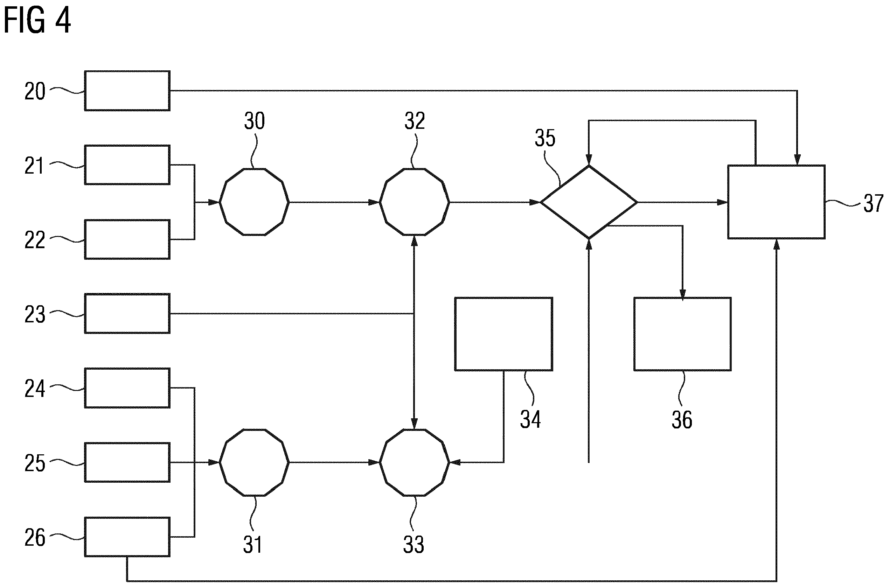

FIG 4 zeigt eine weitere beispielhafte Ausführungsform des Verfahrens. Ziel des Verfahrens ist das Erstellen eines Kommissionierungsauftrags 37. Der Kommissionierungsauftrag 37 kann den Transportdaten 8 entsprechen. Die genutzten Eingangsgrößen werden im Folgenden beschrieben:
- eine Adresse 20 des Zielortes, insbesondere die eindeutige Adresse des entsprechenden Warenkanals 3, beispielsweise der Warenkanal 3 mit der Adresse 9021;
- ein Ausgangssensor 21 und/oder ein Eingangssensor 22 der Sensoreinheit 4, wobei Ausgangssensoren 21 an als Ausgang genutzten Warenkanälen 3 und Eingangssensoren 22 an als Wareneingang genutzten Warenkanälen 3 angeordnet sind; wie oben beschrieben tragen die die Ausgangssensoren 21 und Eingangssensoren 22 jeweils zu den Sensordaten der Sensoreinheit 4 bei;
- maximale Größe 23 beziehungsweise maximale Anzahl an Transportgefäßen, welche in einem jeweiligen Warenkanal 3 angeordnet werden können;
- Produktionstakt beziehungsweise Taktzeit 24, welche die Periodendauer oder Frequenz der Produktion eines Zwischenprodukts angibt;
- Wiederbeschaffungszeit 25, welche insbesondere der Dauer des Transports entspricht, welche Teil der Beschaffungsdaten 7 ist;
- Bauteilmenge 26 in einem Transportbehältnis, welche insbesondere dem oben genannten vorbestimmten Wert an Bauteilen pro Transportbehältnis entspricht, wobei die Bauteilmenge 26 pro Transportbehältnis insbesondere für jedes Bauteil beziehungsweise jede Bauteilart spezifisch und konstant ist.

In einem Schritt 30 wird eine aktuelle Anzahl an Transportbehältnissen in einem jeweiligen Warenkanal 3 bestimmt. Dies erfolgt anhand der Sensordaten beziehungsweise der Daten von Ausgangssensoren 21 und/oder Eingangssensoren 22. Zusätzlich wird in einem Schritt 32 eine maximale Anzahl 32 an Transportbehältnissen und/oder eine Anzahl 32 freier Plätze für Transportbehältnisse in dem jeweiligen Warenkanal 3 bestimmt. Insbesondere gibt die Anzahl 32 freier Plätze an, wie viele freie Wareneingangsplätze für Transportbehältnisse ein jeweiliger Warenkanal 3 noch aufweist. Die Anzahl 32 entspricht somit der maximalen Anzahl an Transportbehältnisse, die ein jeweiliger Warenkanal 3 aktuell zusätzlich zu den vorhandenen Transportbehältnissen noch aufnehmen kann.

In einem Schritt 31 wird ausgehend von der Bauteilmenge pro Transportbehältnis 26 beziehungsweise dem vorbestimmten Wert, der Wiederbeschaffungszeit 25 beziehungsweise den Beschaffungsdaten 7 sowie dem Produktionstakt beziehungsweise der Taktzeit 24 eine Anzahl an benötigten Transportbehältnisse in Bezug auf den Produktionsauftrag der jeweiligen Produktionseinheit 2 bestimmt. Insbesondere erfolgt dies parallel für alle unterschiedlichen benötigten Bauteilarten. In einem Schritt 33 wird dies verglichen mit der aktuellen Anzahl, welche im Schritt 30 bestimmt wird. Als Ergebnis des Schritts 33 wird bestimmt, wie viele Transportmittelbehältnisse mit Bauteilen zusätzlich zu den an der Produktionseinheit 2 beziehungsweise im Warenkanal 3 vorhandenen Transportbehältnissen benötigt werden und aus dem Lager zum Warenkanal 3 beziehungsweise zur Produktionseinheit 2 transportiert werden müssen. Dies kann als Anzahl an zu transportierenden Transportbehältnissen bezeichnet werden. In einem optionalen Schritt 34 kann eine Nutzereingabe empfangen werden. Abhängig von der Nutzereingabe kann die Anzahl zu transportierender Transportbehältnisse an einen veränderten Bedarf angepasst werden.

In einem Schritt 35 erfolgt ein Plausibilitätscheck. Im Rahmen dieser Prüfung der Plausibilität kann beispielsweise überprüft werden, ob der jeweilige Warenkanal 3 dazu in der Lage ist, die Anzahl der zu transportierenden Transportbehältnisse aufzunehmen. Im Falle eines Fehlers oder im Falle fehlender Plausibilität kann eine Fehlermeldung 36 ausgegeben werden. Andernfalls erfolgt basierend auf der Anzahl zu transportierender Transportbehältnisse und der Adresse des Zielortes, also beispielsweise der Adresse des Warenkanals 9021, das Erstellen des Kommissionierungsauftrags 37.

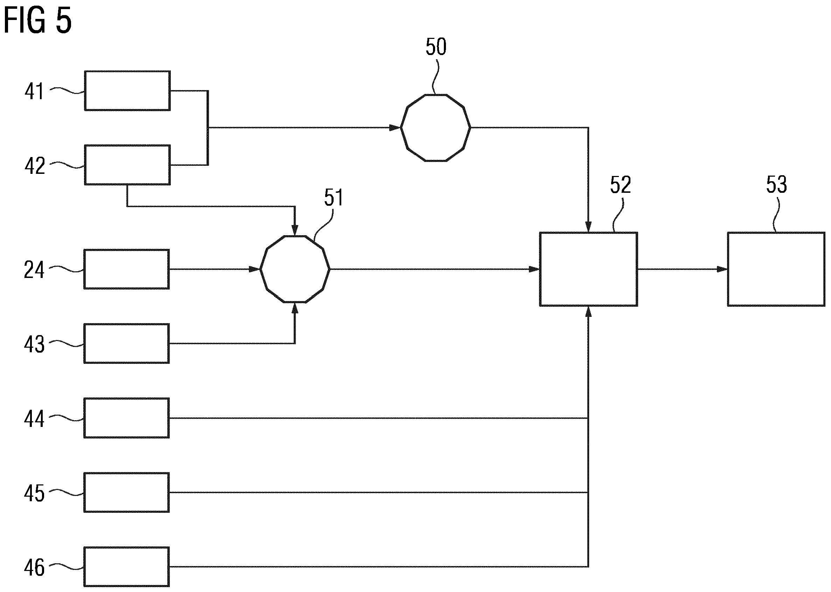

Zuletzt zeigt FIG 5 einen intelligenten Abtransport leerer Transportbehältnisse von den Produktionseinheiten 2 beziehungsweise deren Warenkanäle 3. Die genutzten Eingangsgrößen werden auch hier kurz beschrieben:
- ein Ausgangssensor 41 und/oder ein Eingangssensor 42 der Sensoreinheit 4, wobei deren Sensordaten die Anzahl leerer Transportbehältnisse in einem jeweiligen Warenkanal 3 beziehungsweise an einer jeweiligen Produktionseinheit 2 betreffen;
- der Produktionstakt beziehungsweise die Taktzeit 24;
- eine Standard-Entsorgungszeit 43, welche insbesondere ein vorgegebener mittlerer Wert für die Entsorgung beziehungsweise Abfuhr leerer Transportbehältnisse ist;
- eine maximale Größe 44 eines Entsorgungskanals;
- eine Adresse 45 des Zielortes, insbesondere eine eindeutige Adresse für die Entsorgung der leeren Transportbehältnisse, vorzugsweise eine eindeutige Adresse bezogen auf die Koordinaten 19 der Produktionsumgebung 1; und
- eine Klasse des jeweils zu entsorgenden Transportbehältnisses, beispielsweise kann es sich um eine Kiste oder eine Palette handeln.

In einem Schritt 50 erfolgt eine Berechnung einer Anzahl leerer Transportbehältnisse in einem jeweiligen Warenkanal 3, insbesondere basierend auf den Sensordaten von Ausgangssensor 41 und/oder ein Eingangssensor 42. In einem Schritt 51 erfolgt eine dynamische Berechnung einer dynamischen Entsorgungszeit basierend auf der Standard-Entsorgungszeit 43, der Taktzeit 24 und dem Eingangssensor 42. Aus der Anzahl leerer Transportbehältnisse sowie der dynamischen Entsorgungszeit kann in einem Schritt 52 ein Transportauftrag für den Abtransport der leeren Transportbehältnisse erstellt werden. Dieser Transportauftrag kann insbesondere Teil der Transportdaten 8 sein. Mit anderen Worten trägt der Transportauftrag für den Abtransport der leeren Transportbehältnisse zu den Transportdaten 8 bei. Auf diese Weise kann der Abtransport der leeren Transportbehältnisse beispielsweise in den Fahrplan beziehungsweise Ablaufplan der Transportdaten 8 integriert werden. Es ist ein gezielter Transport sowohl von Bauteilen als auch leerer Transportbehältnisse mittels der gemeinsamen Transportdaten 8 möglich. In einem Schritt 53 kann dies an das Transportsystem übermittelt werden.

## Patentansprüche

1. Verfahren zum Bereitstellen von Transportdaten (8) zum Steuern eines Warentransports in einer Produktionsumgebung (1), mit den Schritten:
- Bestimmen von Belegungsdaten (5) anhand von Sensordaten einer Sensoreinheit (4) an einer Produktionseinheit (2), wobei die Belegungsdaten (5) einen Belegungszustand zumindest eines Wareneingangs (3) der Produktionseinheit (2) in der Produktionsumgebung (1) mit jeweiligen lagernden Bauteilen betreffen,
- Bestimmen von Bauteildaten (6), wobei die Bauteildaten (6) angeben, welche Bauteile für einen der Produktionseinheit (2) zugeordneten Produktionsauftrag an der Produktionseinheit (2) benötigt werden,
- Bestimmen von Beschaffungsdaten (7) für die zu verbauenden Bauteile, wobei die Beschaffungsdaten (7) angeben, wie lange ein Transport eines jeweiligen der zu verbauenden, entsprechend der Bauteildaten (6) an der Produktionseinheit (2) benötigten Bauteile von einem jeweiligen Lagerplatz zu der Produktionseinheit (2) voraussichtlich benötigt, wobei das Bestimmen der Beschaffungsdaten (7) zumindest in Abhängigkeit von einer Position des jeweiligen Lagerplatzes sowie einer Position der Produktionseinheit (2) erfolgt,
- Bestimmen von Transportdaten (8) abhängig von den Belegungsdaten (5), den Bauteildaten (6) und den Beschaffungsdaten (7), wobei die Transportdaten (8) mittels eines Optimierungsalgorithmus bestimmt werden, wobei der Optimierungsalgorithmus die Belegungsdaten (5), die Bauteildaten (6) und die Beschaffungsdaten (7) als Input-Daten erhält und die Transportdaten (8) ausgibt, wobei die Transportdaten (8) einen durchzuführenden Transport beschreiben, und
- Übermitteln der Transportdaten (8) an ein Transportsystem zum Steuern eines Transports an Bauteilen mittels der Transportdaten (8).

2. Verfahren nach Anspruch 1, **dadurch gekennzeichnet, dass** die Transportdaten (8) an eine Vielzahl fahrerloser Transportfahrzeuge übermittelt werden.

3. Verfahren nach einem der vorhergehenden Ansprüche, **dadurch gekennzeichnet , dass** abhängig von dem der Produktionseinheit (2) zugeordneten Produktionsauftrag ein Produktionstakt (24) bestimmt wird und das Bestimmen der Transportdaten (8) zusätzlich abhängig von diesem Produktionstakt (24) erfolgt.

4. Verfahren nach Anspruch 3, **dadurch gekenn**- **zeichnet**, dass in Abhängigkeit von dem Produktionstakt (24), den Bauteildaten (6) und den Belegungsdaten (5) eine Restlaufzeit der an der Produktionseinheit (2) lagernden Bauteile bestimmt wird, wobei der durchzuführende Transport entsprechend den Transportdaten (8) zu einem Zeitpunkt, zu welchem die Restlaufzeit größer als eine durch den Produktionstakt (24) bestimmte Zeitspanne ist, kommandiert wird.

5. Verfahren nach einem der vorhergehenden Ansprüche, **dadurch gekennzeichnet, dass** den jeweiligen Lagerplätzen und/oder der Produktionseinheit (2) jeweils eindeutige Koordinaten (19) bezogen auf ein Koordinatensystem der Produktionsumgebung (1) zugeordnet werden.

6. Verfahren nach einem der vorhergehenden Ansprüche, **dadurch gekennzeichnet , dass** das Bestimmen der Belegungsdaten (5) beinhaltet, anhand der Sensordaten eine Anzahl an in dem zumindest einen Wareneingang (3) befindlichen Transportbehältnissen zu bestimmen und diese Anzahl an Transportbehältnissen mit einem vorbestimmten Wert zu multiplizieren.

7. Verfahren nach Anspruch 5 oder 6, **dadurch gekennzeichnet, dass** ein jeweiliger Inhalt eines in dem zumindest einen Wareneingang (3) oder auf einem Transportweg zu dem zumindest einen Wareneingang (3) befindlichen Transportbehältnisses anhand der Koordinate des jeweiligen Wareneingangs (3) bestimmt wird.

8. Verfahren nach einem der vorhergehenden Ansprüche, d a - **durch gekennzeichnet**, dass die Belegungsdaten (5) und/oder die Sensordaten zusätzlich einen Belegungszustand zumindest eines Warenausgangs der Produktionseinheit (2) betreffen.

9. Steuereinheit (9) zum Bereitstellen von Transportdaten (8) zum Steuern eines Warentransports in einer Produktionsumgebung (1), mit
- einer Belegungsbestimmungsdateneinheit (10) ausgebildet zum Bestimmen von Belegungsdaten (5), welche einen Belegungszustand zumindest eines Wareneingangs (3) einer Produktionseinheit (2) in der Produktionsumgebung (1) mit jeweiligen lagernden Bauteilen betreffen, anhand von Sensordaten einer Sensoreinheit (4) der Produktionseinheit (2),
- einer Bauteildatenbestimmungseinheit (11) ausgebildet zum Bestimmen von Bauteildaten (6), wobei die Bauteildaten (6) angeben, welche Bauteile für einen der Produktionseinheit (2) zugeordneten Produktionsauftrag an der der Produktionseinheit (2) benötigt werden,
- einer Beschaffungsdatenbestimmungseinheit (12) ausgebildet zum Bestimmen von Beschaffungsdaten (7) für die zu verbauenden Bauteile, wobei die Beschaffungsdaten (7) angeben, wie lange ein Transport eines jeweiligen der zu verbauenden, entsprechend der Bauteildaten (6) an der Produktionseinheit (2) benötigten Bauteile von einem jeweiligen Lagerplatz zu der Produktionseinheit (2) voraussichtlich benötigt, wobei das Bestimmen der Beschaffungsdaten (7) zumindest in Abhängigkeit von einer Position des jeweiligen Lagerplatzes sowie einer Position der Produktionseinheit (2) erfolgt,
- einer Transportdatenbestimmungseinheit (13) ausgebildet zum Bestimmen der Transportdaten (8) abhängig von den Belegungsdaten (5), den Bauteildaten (6) und den Beschaffungsdaten (7), wobei die Transportdaten (8) mittels eines Optimierungsalgorithmus bestimmt werden, wobei der Optimierungsalgorithmus die Belegungsdaten (5), die Bauteildaten (6) und die Beschaffungsdaten (7) als Input-Daten erhält und die Transportdaten (8) ausgibt, wobei die Transportdaten (8) einen durchzuführenden Transport beschreiben, und
- eine Ausgabeschnittstelle zum Ausgeben der Transportdaten (8), die dazu ausgebildet ist, die Transportdaten (8) an ein Transportsystem zum Steuern eines Transports an Bauteilen mittels der Transportdaten (8) zu übermitteln.

10. Produktionsumgebung (1) mit
- der Steuereinheit (9) nach Anspruch 9, und
- der Produktionseinheit (2), an welcher die Sensoreinheit (4) angeordnet ist, wobei die Sensoreinheit (4) dazu ausgebildet ist, die Sensordaten bezüglich des Belegungszustands des zumindest einen Wareneingangs (3) zu erfassen.

11. Computerprogramm, welches direkt in einen Speicher einer Steuereinheit (9) ladbar ist, mit Programmcodemitteln, um die Schritte des Verfahrens nach einem der Ansprüche 1 bis 8 auszuführen, wenn das Programm in der Steuereinheit (9) ausgeführt wird.

12. Speichermedium mit darauf gespeicherten elektronisch lesbaren Steuerinformationen, welche zumindest ein Computerprogramm nach Anspruch 11 umfassen und derart ausgestaltet sind, dass sie bei Verwendung des Speichermediums in einer Steuereinheit (9) ein Verfahren nach einem der Ansprüche 1 bis 8 durchführen.

13. Verfahren zum Steuern eines Warentransports in einer Produktionsumgebung, wobei das Transportsystem den Warentransport gemäß Transportdaten (8) steuert, wobei die Transportdaten (8) an das Transportsystem gemäß einem Verfahren nach einem der Ansprüche 1 bis 8 bereitgestellt werden.

14. Verfahren zum Transportieren von Bauteilen in einer Produktionsumgebung, wobei ein Transportsystem die Bauteile gemäß den Transportdaten transportiert, wobei die Transportdaten (8) an das Transportsystem gemäß einem Verfahren nach einem der Ansprüche 1 bis 8 bereitgestellt werden.

## Claims

1. Method for providing transport data (8) for controlling goods transport in a production environment (1) with the following steps:
- determining occupancy data (5) on the basis of sensor data of a sensor unit (4) at a production unit (2), wherein the occupancy data (5) relates to an occupancy status of at least one goods inlet (3) of the production unit (2) in the production environment (1) with respective stored components,
- determining component data (6), wherein the component data (6) indicates which components are required at the production unit (2) for a production order assigned to said production unit (2),
- determining procurement data (7) for the components to be installed, wherein the procurement data (7) indicates how long transport of a respective one of the components to be installed and required according to the component data (6) at the production unit (2) from a respective storage location to the production unit (2) is expected to take, wherein the determination of the procurement data (7) takes place at least in dependence on a position of the respective storage location and a position of the production unit (2),
- determining transport data (8) depending on the occupancy data (5), the component data (6) and the procurement data (7), wherein the transport data (8) is determined by means of an optimization algorithm, wherein the optimization algorithm receives the occupancy data (5), the component data (6) and the procurement data (7) as input data and outputs the transport data (8), wherein the transport data (8) describes a transport process to be carried out, and
- transmitting the transport data (8) to a transport system for controlling a transport of components by means of the transport data (8).

2. Method according to claim 1, **characterised in that** the transport data (8) is transmitted to a plurality of driverless transport vehicles.

3. Method according to one of the preceding claims, **characterised in that** a production cycle (24) is determined depending on the production order assigned to the production unit (2) and the transport data (8) is additionally determined depending on this production cycle (24).

4. Method according to claim 3, **characterised in that** a remaining runtime of the components stored at the production unit (2) is determined in dependence on the production cycle (24), the component data (6) and the occupancy data (5), wherein the transport to be performed is commanded in accordance with the transport data (8) at a time at which the remaining runtime is greater than a time period determined by the production cycle (24).

5. Method according to one of the preceding claims, **characterised in that** the respective storage locations and/or the production unit (2) are in each case assigned unique coordinates (19) with respect to a coordinate system of the production environment (1).

6. Method according to one of the preceding claims, **characterised in that** the determination of the occupancy data (5) includes determining a number of transport containers located in the at least one goods inlet (3) on the basis of the sensor data and multiplying this number of transport containers by a predetermined value.

7. Method according to claim 5 or 6, **characterised in that** a respective content of a transport container located in the at least one goods inlet (3) or on a transport route to the at least one goods inlet (3) is determined on the basis of the coordinate of the respective goods inlet (3).

8. Method according to one of the preceding claims, **characterised in that** the occupancy data (5) and/or the sensor data additionally relate to an occupancy status of at least one goods outlet of the production unit (2).

9. Control unit (9) for providing transport data (8) for controlling goods transport in a production environment (1), comprising
- an occupancy determining data unit (10) embodied to determine occupancy data (5) relating to an occupancy status of at least one goods inlet (3) of a production unit (2) in the production environment (1) with respective stored components on the basis of sensor data of a sensor unit (4) of the production unit (2),
- a component data determining unit (11) embodied to determine component data (6), wherein the component data (6) indicates which components are required at the production unit (2) for a production order assigned to the production unit (2),
- a procurement data determining unit (12) embodied to determine procurement data (7) for the components to be installed, wherein the procurement data (7) indicates how long transport of a respective one of the components to be installed and required according to the component data (6) at the production unit (2) from a respective storage location to the production unit (2) is expected to take, wherein the determination of the procurement data (7) takes place at least in dependence on a position of the respective storage location and a position of the production unit (2),
- a transport data determining unit (13) embodied to determine the transport data (8) depending on the occupancy data (5), the component data (6) and the procurement data (7), wherein the transport data (8) is determined by means of an optimization algorithm, wherein the optimization algorithm receives the occupancy data (5), the component data (6) and the procurement data (7) as input data and outputs the transport data (8), wherein the transport data (8) describes a transport process to be carried out, and
- an output interface for outputting the transport data (8), which is embodied to transmit the transport data (8) to a transport system in order to control a transport process of components by means of the transport data (8).

10. Production environment (1) with
- the control unit (9) according to claim 9, and
- the production unit (2) on which the sensor unit (4) is arranged, wherein the sensor unit (4) is embodied to capture the sensor data relating to the occupancy status of the at least one goods inlet (3).

11. Computer program, which can be loaded directly into a memory of a control unit (9), with program code means for executing the steps of the method according to one of claims 1 to 8 when the program is executed in the control unit (9).

12. Storage medium with electronically readable control information stored thereupon, which comprises at least one computer program according to claim 11 and is designed to perform a method according to one of claims 1 to 8 when the storage medium is used in a control unit (9).

13. Method for controlling goods transport in a production environment, wherein the transport system controls the goods transport according to transport data (8), wherein the transport data (8) is provided to the transport system according to a method according to one of claims 1 to 8.

14. Method for transporting components in a production environment, wherein a transport system transports the components according to the transport data, wherein the transport data (8) is provided to the transport system according to a method according to one of claims 1 to 8.

## Revendications

1. Procédé pour disposer de données (8) de transport pour la commande d'un transport de marchandises dans un environnement (1) de production, comprenant les stades :
- détermination de données (5) d'occupation à l'aide de données de capteur d'une unité (4) de capteur à une unité (2) de production, dans lequel les données (5) d'occupation concernent un état d'occupation d'au moins une entrée (3) de marchandises de l'unité (2) de production dans l'environnement (1) de production par des pièces respectives en dépôt,
- détermination de données (6) de pièce, dans lequel les données (6) de pièce indiquent les pièces, qui sont nécessaires à l'unité (2) de production pour une commande de production, affectée à l'unité (2) de production ,
- détermination de données (7) d'approvisionnement pour les pièces à utiliser, dans lequel les données (7) d'approvisionnement indiquent la longueur d'un transport de l'une respective des pièces à utiliser nécessaires, conformément aux données (6) de pièce, à l'unité (2) de production, probablement nécessaire d'un emplacement respectif de dépôt à l'unité (2) de production, dans lequel la détermination des données (7) d'approvisionnement s'effectue au moins en fonction d'une position de l'emplacement respectif de dépôt, ainsi que d'une position de l'unité (2) de production,
- détermination de données (8) de transport en fonction des données (5) d'occupation, des données (6) de pièce et des données (7) d'approvisionnement, dans lequel on détermine les données (8) de transport au moyen d'un algorithme d'optimisation, dans lequel l'algorithme d'optimisation reçoit, comme données d'entrée, les données (5) d'occupation, les données (6) de pièce et les données (7) d'approvisionnement et donne les données (8) de transport, dans lequel les données (8) de transport décrivent un transport à effectuer, et
- transmission des données (8) de transport à un système de transport pour la commande d'un transport de pièces au moyen des données (8) de transport.

2. Procédé suivant la revendication 1, **caractérisé en ce que** l'on transmet les données (8) de transport à une pluralité de véhicules de transport sans conducteur.

3. Procédé suivant l'une des revendications précédentes, **caractérisé en ce que** l'on détermine une cadence (24) de production en fonction de la commande de production affectée à l'unité (2) de production et **en ce que** la détermination des données (8) de transport s'effectue en outre en fonction de cette cadence (24) de production.

4. Procédé suivant la revendication 3, **caractérisé en ce que** l'on détermine, en fonction de la cadence (24) de production, des données (6) de pièce et des données (5) d'occupation, une durée de fonctionnement restante des pièces en dépôt à l'unité (2) de production, dans lequel on donne instruction d'effectuer le transport conformément aux données (8) de transport à un instant où la durée de fonctionnement restante est plus grande qu'un laps de temps déterminé par la cadence (24) de production.

5. Procédé suivant l'une des revendications précédentes, **caractérisé en ce que** l'on affecte, aux emplacements respectifs de dépôt et/ou à l'unité (2) de production, respectivement des coordonnées (19) univoques rapportées à un système de coordonnées de l'environnement (1) de production.

6. Procédé suivant l'une des revendications précédentes, **caractérisé en ce que** la détermination des données (5) d'occupation comporte la détermination à l'aide des données de capteur d'un nombre de récipients de transport se trouvant dans la au moins une entrée (3) de marchandises et de multiplier ce nombre de récipients de transport par une valeur déterminée à l'avance.

7. Procédé suivant la revendication 5 ou 6, **caractérisé en ce que** l'on détermine, à l'aide des coordonnées de l'entrée (3) respective de marchandises, ce que contient respectivement un récipient de transport se trouvant dans la au moins une entrée (3) de marchandises ou sur un chemin de transport allant à la au moins une entrée (3) de marchandises.

8. Procédé suivant l'une des revendications précédentes, **caractérisé en ce que** les données (5) d'occupation et/ou les données de capteur concernent en outre un état d'occupation d'au moins une sortie de marchandises de l'unité (2) de production.

9. Unité (9) de commande pour disposer de données (8) de transport pour la commande d'un transport de marchandises dans un environnement (1) de production, comprenant
- une unité (10) de données de détermination d'occupation constituée pour la détermination de données (5) d'occupation, qui concerne un état d'occupation d'au moins une entrée (3) de marchandises d'une unité (2) de production dans l'environnement (1) de production par des pièces respectives en dépôt, à l'aide de données de capteur d'une unité (4) de capteur de l'unité (2) de production,
- une unité (11) de détermination de données de pièce constituée pour la détermination de données (6) de pièce, dans laquelle les données (6) de pièces indiquent les pièces, qui sont nécessaires à l'unité (2) de production pour une commande de production affectée à l'unité (2) de production,
- une unité (12) de détermination de données d'approvisionnement constituée pour la détermination de données (7) d'approvisionnement pour les pièces à utiliser, dans lequel les données (7) d'approvisionnement indiquent la longueur d'un transport de l'une respective des pièces à utiliser nécessaires, conformément aux données (6) de pièce, à l'unité (2) de production, probablement nécessaire d'un emplacement respectif de dépôt à l'unité (2) de production, dans lequel la détermination des données (7) d'approvisionnement s'effectue au moins en fonction d'une position de l'emplacement respectif de dépôt, ainsi que d'une position de l'unité (2) de production,
- une unité (13) de détermination de données de transport constituée pour la détermination de données (8) de transport en fonction des données (5) d'occupation, des données (6) de pièce et des données (7) d'approvisionnement, dans lequel on détermine les données (8) de transport au moyen d'un algorithme d'optimisation, dans lequel l'algorithme d'optimisation reçoit, comme données d'entrée, les données (5) d'occupation, les données (6) de pièce et les données (7) d'approvisionnement et donne les données (8) de transport, dans lequel les données (8) de transport décrivent un transport à effectuer, et
- une interface d'édition pour l'édition de données (8) de transport, qui sont constituées pour transmettre les données (8) de transport à un système de transport pour la commande d'un transport de pièces au moyen des données (8) de transport.

10. Environnement (1) de production comprenant
- l'unité (9) de commande suivant la revendication 9, et
- l'unité (2) de production, sur laquelle l'unité (4) de capteur est montée, dans lequel l'unité (4) de capteur est constituée pour détecter les données de capteur se rapportant à l'état d'occupation de la au moins une entrée (3) de marchandises.

11. Programme d'ordinateur, qui peut être chargé directement dans une mémoire d'une unité (9) de commande, comprenant des moyens de code de programme pour exécuter les stades du procédé suivant l'une des revendications 1 à 8, lorsque le programme est exécuté dans l'unité (9) de commande.

12. Support de mémoire sur lequel sont mis en mémoire des informations de commande, déchiffrables électroniquement, qui comprennent au moins un programme d'ordinateur suivant la revendication 11 et qui sont conformées de manière à exécuter, lors de l'utilisation du support de mémoire dans une unité (9) de commande, un procédé suivant l'une des revendications 1 à 8.

13. Procédé de commande d'un transport de marchandises dans un environnement de production, dans lequel le système de transport commande le transport de marchandises suivant des données (8) de transport, dans lequel on met les données (8) de transport à disposition du système de transport suivant un procédé suivant l'une des revendications 1 à 8.

14. Procédé de transport de pièces dans un environnement de production, dans lequel un système de transport transporte les pièces suivant les données de transport, dans lequel on met les données (8) de transport à disposition du système de transport par un procédé suivant l'une des revendications 1 à 8.
